# EUROPEAN PATENT APPLICATION

(11) **EP 4 102 185 A1**
(43) Date of publication of application: **14.12.2022**
(21) Application number: 21750354.9
(22) Date of filing: 14.01.2021
(51) Int. Cl.: G01C 21/26, G01C 21/36

(54) **INFORMATION PROCESSING DEVICE, CONTROL METHOD, PROGRAM, AND STORAGE MEDIUM**

(30) Priority: 07.02.2020 JP 2020019831
(71) Applicant: Pioneer Corporation, Tokyo 113-0021 (JP)
(72) Inventor: FUKUI, Kotaro, Kawagoe-shi, Saitama 350-8555 (JP); IWATA, Masahiro, Kawagoe-shi, Saitama 350-8555 (JP); IZUMI, Shota, Kawagoe-shi, Saitama 350-8555 (JP); ONUMA, Yohei, Kawagoe-shi, Saitama 350-8555 (JP)
(74) Representative: Viering, Jentschura & Partner mbB Patent- und Rechtsanwälte
(86) International application number: PCT/JP2021/001065
(87) International publication number: WO 2021/157313

(57) **Abstract**

The voice guidance device 1, the voice guidance device 1A or the server device 2 includes a route information acquisition unit, a position information acquisition unit, a voice guiding unit, and a notification unit. The route information acquisition unit is configured to acquire route information indicative of a route on which a moving body travels. The position information acquisition unit is configured to acquire position information of the moving body. The voice guiding unit is configured to perform a voice guidance relating to the route. The notification unit is configured to perform a notification by voice that the moving body is traveling along the route, if the moving body is travelling along the route and the voice guiding unit has not performed the voice guidance during travel of the moving body for a predetermined distance or for a predetermined amount of time.

## Description

### TECHNICAL FIELD

The present invention relates to route guidance by voice.

### BACKGROUND ART

Conventionally, a navigation device for performing route guidance to a destination by voice is known. For example, Patent Literature 1 discloses a voice navigation system for notifying a user of the approximate distance and orientation from the current location to the destination by increasing the spread of the sound field with the decrease of the distance from the current location to the destination and making the user hear the sound from the direction of the destination with respect to the head of the user.

### PRIOR ART DOCUMENTS

### PATENT LITERATURE

Patent Literature 1: JP 2017-138277A

### SUMMARY

### PROBLEM TO BE SOLVED BY THE INVENTION

In a case of the route guidance mainly based on display, the user can confirm at any time whether or not the vehicle is traveling in accordance with the guidance, by visually recognizing a screen which displays the route information and the current position information on the map. On the other hand, in a case of the route guidance mainly based on voice, if the interval between the voice guidance is long, the user will tend to feel anxious about whether or not the vehicle is traveling in accordance with the guidance because it is difficult for the user to grasp whether or not the vehicle is traveling in accordance with the guidance.

The present invention has been made to solve the above issues, and a main object thereof is to provide an information processing device capable of notifying a user of suitable information in the route guidance by voice.

### MEANS FOR SOLVING THE PROBLEM

One invention is an information processing device including: a route information acquisition unit configured to acquire route information indicative of a route on which a moving body travels; a position information acquisition unit configured to acquire position information of the moving body; a voice guiding unit configured to perform a voice guidance relating to the route; and a notification unit configured to perform a notification by voice that the moving body is traveling along the route, if the moving body is travelling along the route and the voice guiding unit has not performed the voice guidance during travel of the moving body for a predetermined distance or for a predetermined amount of time.

Another invention is an information processing device including: a route information acquisition unit configured to acquire route information indicative of a route on which a moving body that is a pedestrian or a vehicle travels; a position information acquisition unit configured to acquire position information of the moving body; a biometric information acquisition unit configured to acquire biometric information regarding the pedestrian or a driver of the vehicle; a voice guiding unit configured to perform a voice guidance relating to the route; and a notification unit configured to perform a notification by voice that the moving body is traveling along the route, if an index value based on the biometric information indicates an abnormal value and the moving body is travelling along the route.

Still another invention is a control method executed by an information processing device, the control method including: acquiring route information indicative of a route on which a moving body travels; acquiring position information of the moving body; performing a voice guidance relating to the route; and performing a notification by voice that the moving body is traveling along the route, if the moving body is travelling along the route and the voice guidance has not been performed during travel of the moving body for a predetermined distance or for a predetermined amount of time.

Still another invention is a program executed by a computer, the program causing the computer to function as: a route information acquisition unit configured to acquire route information indicative of a route on which a moving body travels; a position information acquisition unit configured to acquire position information of the moving body; a voice guiding unit configured to perform a voice guidance relating to the route; and a notification unit configured to perform a notification by voice that the moving body is traveling along the route, if the moving body is travelling along the route and the voice guiding unit has not performed the voice guidance during travel of the moving body for a predetermined distance or for a predetermined amount of time.

### BRIEF DESCRIPTION OF THE DRAWINGS

FIG. 1 illustrates a configuration example of a voice guidance system according to a first embodiment.
FIG. 2 illustrates an example of a schematic configuration of a voice guidance device.
FIG. 3 illustrates the timing and notification contents of on-route notification on a map based on a first example.
FIG. 4 illustrates the timing and notification contents of on-route notification on a map based on a second example.
FIG. 5 is an example of a flowchart showing the procedure of the route guide process to be performed by the voice guidance device according to the first embodiment.
FIG. 6 illustrates a configuration example of a voice guidance system according to a second embodiment.
FIG. 7 illustrates a graph indicative of an example of a temporal variation, from the running start time of the vehicle, of the biometric index value indicated by the biometric information generated by the biometric information detection device.
FIG. 8 is an example of a flowchart showing the procedure of the route guide process to be performed by the voice guidance device according to the second embodiment.
FIG. 9 illustrates a configuration example of a voice guidance system according to a third embodiment.
FIG. 10 illustrates an example of a schematic configuration of a server device according to a third embodiment.

### DETAILED DESCRIPTION OF THE PREFERRED EMBODIMENTS

In one preferred embodiment of the present invention, the information processing device includes: a route information acquisition unit configured to acquire route information indicative of a route on which a moving body travels; a position information acquisition unit configured to acquire position information of the moving body; a voice guiding unit configured to perform a voice guidance relating to the route; and a notification unit configured to perform a notification by voice that the moving body is traveling along the route, if the moving body is travelling along the route and the voice guiding unit has not performed the voice guidance during travel of the moving body for a predetermined distance or for a predetermined amount of time.

In general, in the route guidance by voice, since it is impossible to confirm at the user's timing whether or not the moving body is travelling along the route, the user could become anxious whether or not the moving body is travelling along the route. In view of the above, the information processing device performs a notification by voice that the moving body is traveling along the route if the voice guidance has not been performed during travel of the moving body for a predetermined distance or for a predetermined amount of time. Thereby, it is possible to suitably suppress or eliminate the above-described anxiety.

In one mode of the information processing device, the notification unit is configured, when performing the notification by voice that the moving body is traveling along route, to perform the notification of information relating to distance or necessary time to a next guidance point of the moving body. According to this mode, the information processing device can provide not only information that the moving body is traveling along route but also rough indications to get to the next guidance point, thereby suitably suppressing or eliminating the user's anxiety.

In another mode of the information processing device, the information processing device further includes: a history information generation unit configured, when there is a user input instructing a notification of whether or not the moving body is traveling along the route, to generate history information of the notification based on the user input; and a learning unit configured to learn the predetermined distance or the predetermined amount of time based on the history information. According to this mode, the information processing device uses the history information of the notification based on the user input regarding whether or not the moving body is traveling along the route. Thereby, the information processing device can suitably learn and acquire the predetermined distance or the predetermined amount of time so that the notification is automatically performed at the timing at which the user feels anxious.

In still another mode of the information processing device, the history information includes information regarding a traveling distance of the moving body or an elapsed time from a time of the voice guidance immediately before the user input to a time of receiving the user input, wherein the learning unit is configured to learn the predetermined distance or the predetermined amount of time to be a representative value of the traveling distance or a representative value of the elapsed time. According to this mode, the information processing device can statistically determine the predetermined distance or the predetermined amount of time so that the notification is made at the timing at which the user feels anxious.

In still another mode of the information processing device, the notification unit is configured, in a case where the moving body is travelling on a route where the moving body goes along a road over a second distance, to perform the notification by voice that the moving body is traveling along the route, if the moving body is travelling along the route and the voice guiding unit has not performed the voice guidance during travel of the moving body for the predetermined distance or for the predetermined amount of time. According to this mode, it is possible for the information processing device to suitably suppress or eliminate the anxiety about whether or not the moving body is travelling along the path when the moving body goes along the road.

In another preferred embodiment of the present invention, the information processing device includes: a route information acquisition unit configured to acquire route information indicative of a route on which a moving body that is a pedestrian or a vehicle travels; a position information acquisition unit configured to acquire position information of the moving body; a biometric information acquisition unit configured to acquire biometric information regarding the pedestrian or a driver of the vehicle; a voice guiding unit configured to perform a voice guidance relating to the route; and a notification unit configured to perform a notification by voice that the moving body is traveling along the route, if an index value based on the biometric information indicates an abnormal value and the moving body is travelling along the route. Thereby, the information processing device can suitably suppress or eliminate the guidance subject's anxiety about whether or not the moving body is travelling along the route.

In one mode of the information processing device, the notification unit is configured to determine a threshold value for determining whether or not the index value is the abnormal value, based on the biometric information acquired in advance by the biometric information acquisition unit. According to this mode, in consideration of the individual difference of target users of guidance, the information processing device can accurately determine whether or not the index value based on the detected biometric information is an abnormal value.

In still another preferred embodiment of the present invention, there is provided a control method executed by an information processing device, the control method including: acquiring route information indicative of a route on which a moving body travels; acquiring position information of the moving body; performing a voice guidance relating to the route; and performing a notification by voice that the moving body is traveling along the route, if the moving body is travelling along the route and the voice guidance has not been performed during travel of the moving body for a predetermined distance or for a predetermined amount of time. By executing the control method, the information processing device can suppress or eliminate the anxiety as to whether or not the moving body is travelling along the route.

In still another preferred embodiment of the present invention, there is provided a program executed by a computer, the program causing the computer to function as: a route information acquisition unit configured to acquire route information indicative of a route on which a moving body travels; a position information acquisition unit configured to acquire position information of the moving body; a voice guiding unit configured to perform a voice guidance relating to the route; and a notification unit configured to perform a notification by voice that the moving body is traveling along the route, if the moving body is travelling along the route and the voice guiding unit has not performed the voice guidance during travel of the moving body for a predetermined distance or for a predetermined amount of time. The computer functions as the above-mentioned information processing device by executing this program. In some embodiments, the program is stored in a storage medium.

### EMBODIMENTS

Preferred embodiments of the present invention is described below with reference to drawings.

### <First Embodiment>

### (1) System Configuration

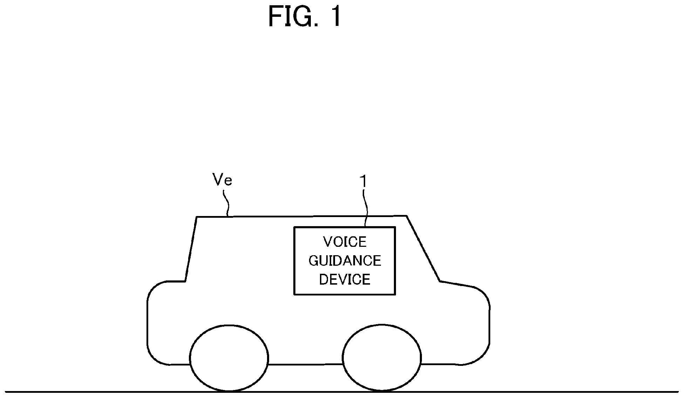

FIG. 1 shows a configuration example of a voice guidance system according to the first embodiment. The voice guidance system includes a vehicle Ve and a voice guidance device 1.

The voice guidance device 1 moves with the vehicle Ve and performs a route guidance mainly by voice so that the vehicle Ve travels along a target route (also referred to as "guidance route") of guidance. It is noted that the term "route guidance mainly by voice" herein indicates a route guidance in which the user can grasp information necessary for driving the vehicle Ve along the guidance route at least by the voice only, and it does not exclude any auxiliary display such as a map around the current position by the voice guidance device 1. In the present embodiment, the voice guidance device 1 outputs, at least by voice, information relating to a point (also referred to as "guidance point") on the route where the guidance is necessary. Examples of the guidance point include an intersection where the vehicle Ve turns, and any other important passing point for the vehicle Ve to travel along the guidance route. For example, the voice guidance device 1 performs voice-based guidance relating to the guidance point such as the distance from the vehicle Ve to the next guidance point and the traveling direction at the guidance point.

Further, the voice guidance device 1 notifies the driver by voice that the vehicle Ve is traveling along the guidance route. Hereafter, the voice notification to the driver that the vehicle Ve is running along the guidance route is also referred to as "on-route notification". As will be described later, along with the voice guidance relating to the guiding point, the voice guidance device 1 performs the on-route notification at the timing at which the driver feels anxious about whether or not the vehicle Ve is running along the guidance route.

The voice guidance device 1 may be an in-vehicle device provided in the vehicle Ve or it may be a portable terminal such as a smartphone. In yet another example, the voice guidance device 1 may be incorporated into the vehicle Ve. The voice guidance device 1 is an example of an "information processing device". Further, the vehicle Ve is an example of the "moving body".

### (2) Device Configuration

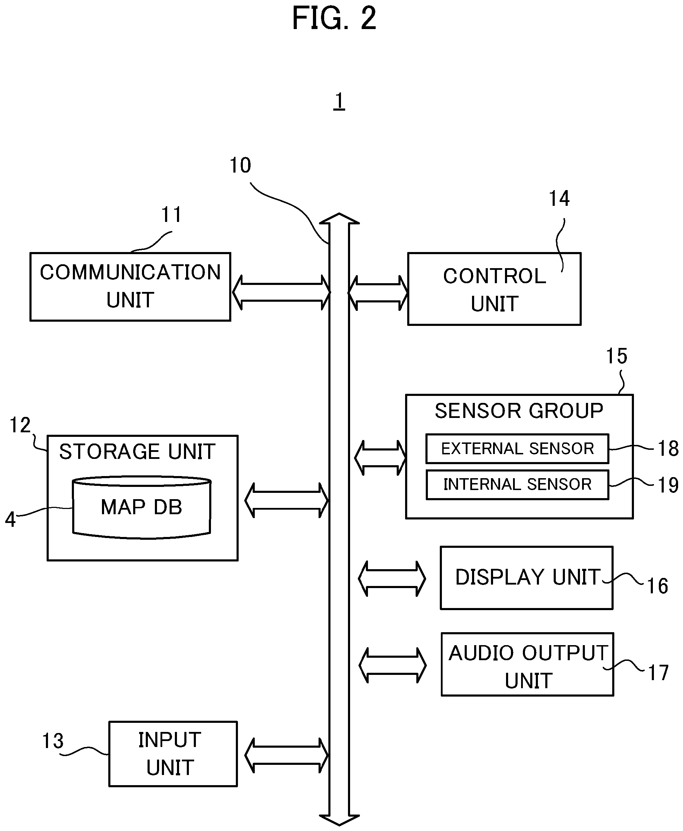

FIG. 2 shows an example of a schematic configuration of a voice (audio) guidance device 1. The voice guidance device 1 mainly includes a communication unit 11, a storage unit 12, an input unit 13, a control unit 14, a sensor group 15, a display unit 16, and an audio output unit 17. Each element in the voice guidance device 1 is connected to each other via a bus line 10.

The communication unit 11 performs data communication with the other terminals based on the control of the control unit 14. For example, the communication unit 11 may receive, from a map management server (not shown), map data for updating the map DB (Database) 4 to be described later.

The storage unit 12 is configured by various memories such as a RAM (Random Access Memory), a ROM (Read Only Memory), and a nonvolatile memory (including a hard disk drive, a flash memory, and the like). The storage unit 12 stores programs for voice guidance device 1 to execute a predetermined process. The above-described programs may include an application program for performing the route guidance by voice. The storage unit 12 is used as a work memory, and temporarily stores information the control unit 14 refers to. The programs to be executed by the voice guidance device 1 may be stored in a storage medium other than the storage unit 12.

Further, the storage unit 12 stores the map DB (Database) 4. The map DB 4 records various types of data required for the route guidance. The map DB 4 is a database that includes, for example, road data representing the road network by combination of nodes and links, and facility data representing facilities that are candidates for destinations, stop-off points, or landmarks. The map DB 4 may be updated based on the map information which the communication unit 11 under the control of the control unit 14 receives from the map management server.

Examples of the input unit 13 include a button, a touch panel, a remote controller, a voice input device, and the like for the user to operate. The display unit 16 is a display or the like for displaying information based on the control by the control unit 14. The audio output unit 17 is a speaker or the like for audio output based on the control by the control unit 14.

The sensor group 15 includes external sensors 18 and internal sensors 19. The external sensors is one or more sensors for recognizing the ambient environment of the vehicle Ve and examples of the external sensors include a camera, a lidar, a radar, an ultrasonic sensor, an infrared sensor, and a sonar. The inner sensors 19 is one or more sensors for positioning the vehicle Ve and examples of the inner sensors include a GNSS (Global Navigation Satellite System) receiver, a gyroscopic sensor, an IMU (Inertial Measurement Unit), a vehicle speed sensor. The sensor group 15 may include sensor(s) such that the control unit 14 can derive the position of the vehicle Ve from the output of the sensor group 15 directly or indirectly (i.e., by performing the estimation process).

The control unit 14 includes a CPU (Central Processing Unit), a GPU (Graphics Processing Unit), and the like, and controls the entire voice guidance device 1. For example, the control unit 14 estimates the position of the vehicle Ve (including the traveling direction) based on the output of one or more sensors of the sensor group 15. Further, if the destination is designated by the input unit 13, the control unit 14 generates a route information indicating a guidance route which is a route to the destination and performs the route guidance based on the map DB 4, the route information and the estimated position information of the vehicle Ve. Further, the control unit 14 controls the display unit 16 to display the information of the music being played, the video content, and a map around the present position. The control unit 14 functions as the "route information acquisition unit", "position information acquisition unit," "voice guiding unit", "notification unit", "history information generation unit", "learning unit," and a computer for executing a program.

It is noted that the process executed by the control unit 14 is not limited to being realized by software by a program and it may be realized by any combination of hardware, firmware, and software. The process executed by the control unit 14 may be implemented by using an integrated circuit that can be programmed by the user such as a FPGA (field-programmable gate array) and a microcomputer. In this case, the program executed by the control unit 14 according to the embodiment may be implemented with the integrated circuit. Thus, the control unit 14 may be implemented by any hardware other than the processor.

The configuration of the voice guidance device 1 shown in FIG. 2 is an example, and various changes may be made to the configuration shown in FIG. 2. For example, instead of storing the map DB 4 in the storage unit 12, the control unit 14 may receive information required for route guidance through the communication unit 11 from a map management server (not shown). In another example, instead of the voice guidance device 1 itself including the audio output unit 17, the voice guidance device 1 may be electrically (or by known communication means) connected to the audio output unit 17 which is configured separately from the voice guidance device 1 and let the audio output unit 17 output sound (including voice). In this case, the audio output unit 17 may be a speaker provided in the vehicle Ve. In yet another example, the voice guidance device 1 may not include a display unit 16. In this case, the voice guidance device 1 may not perform any control relating to the display, or may be electrically (or by known communication means) connected to a display unit provided in the vehicle Ve and let the display unit display information. Similarly, instead of including the sensor group 15, the voice guidance device 1 may acquire from the vehicle Ve information outputted by sensors attached to the vehicle Ve, based on a communication protocol such as CAN (Controller Area Network).

### (3) On-route Notification

The voice guidance device 1 executes the on-route notification at the timing the driver feels anxious about whether or not the vehicle Ve is running along the guidance route. Thereby, the voice guidance device 1 suitably suppresses or eliminates the driver's anxiety about whether the vehicle Ve is running along the guidance route.

### (3-1) Notification Timing

The voice guidance device 1 performs the on-route notification when the voice guidance device 1 determines that the vehicle Ve travels along the guidance route and that the vehicle Ve has not performed a voice guidance regarding the guidance route for a predetermined distance (also referred to as "first distance") or a predetermined amount of time (also referred to as "first amount of time"). Here, for example, the above-described "first distance" or "first amount of time" is predetermined to be a lower limit value of such distance or time length that the driver feels anxious about whether or not the vehicle is traveling along the guidance route, and these values are stored in the storage unit 12 in advance.

In some embodiments, the above-described "first distance" or "first amount of time" may be determined by learning. In this case, the voice guidance device 1 is equipped with a function (i.e., manual on-route notification function) of performing on-route notification in response to detecting a predetermined user input to the input unit 13. Then, the voice guidance device 1 stores the timing of performing the manual on-route notification in the storage unit 12 as history information of the manual on-route notification each time the manual on-route notification is performed. Then, the voice guidance device 1 learns the first distance or the first amount of time described above, based on the history information described above.

Specifically, each time the voice guidance device 1 executes the manual on-route notification, the voice guidance device 1 stores the traveling distance or elapsed time from the time of performing the last voice guidance to the time of receiving a user input instructing the on-route notification, as the history information stored in the storage unit 12. Then, when the traveling distance described above as the history information is stored in the storage unit 12, the voice guidance device 1 calculates the above-described first distance to be the average value, the median or any other representative value of the stored traveling distances. In contrast, when the elapsed time described above as the history information is stored in the storage unit 12, the voice guidance device 1 calculates the first amount of time to be the average value, the median or any other representative value of the stored elapsed times. The calculation of the first distance or the first amount of time may be performed every predetermined time, or may be performed at a timing when the voice guidance device 1 is activated, or may be performed every time the history information may be performed every time a predetermined number of records of the history information is generated.

In this way, on the basis of the history information on the manual on-route notification, the voice guidance device 1 can suitably learn the timing of the on-route notification (so-called, autonomous on-route notification) using the first distance or the first amount of time described above. Thereby, the voice guidance device 1 can suitably learn the timing when the driver feels anxious without voice guidance and perform on-route notification by a timing suitable for the driver. It is noted that, considering the case where the vehicle Ve is used by a plurality of drivers, the voice guidance device 1 may determine the first distance or the first amount of time described above for each of the drivers. In this case, the voice guidance device 1 performs identification of the driver based on any biometric authentication or other authentication such as password authentication and tag authentication when starting the vehicle Ve. Then, the voice guidance device 1 calculates the first distance or the first amount of time described above for each identified driver, based on the history information generated for the each identified driver.

Further, in some embodiments, the voice guidance device 1 may perform on-route notification based on the first distance or the first amount of time described above only when determining that the vehicle is running a path where the vehicle goes along a road over a predetermined distance (also referred to as "second distance"). Namely, the term "path where the vehicle goes along a road over the second distance" indicates such a section on the guidance route that the distance from the last guidance point that the vehicle has passed immediately before to the next guidance point is equal to or greater than the second distance. The second distance described above is predetermined to be equal to or greater than the first distance.

Here, when the vehicle Ve is traveling a route that the vehicle goes along the road for a while, no voice guidance for the guidance route is performed until it approaches the next guidance point. Therefore, when the driver does not perform the confirmation of the route and the current position by the screen display during this time, it is assumed that the driver feels anxious about whether or not the vehicle Ve is travelling along the guidance route because the driver cannot confirm whether or not the vehicle Ve is travelling along the guidance route. In view of the above, when determining that the vehicle Ve is running on such a route that the vehicle goes along the road over the second distance, the voice guidance device 1 performs the on-route notification based on the first distance or the first amount of time described above. Thereby, it is possible to suitably suppress or eliminate the driver's anxiety regarding the guidance route.

### (3-2) Concrete Example

Next, a specific example including the notification content of the on-route notification will be described. In some embodiments, the voice guidance device 1 performs an on-route notification to output information indicating that the vehicle Ve is travelling along the guidance route while outputting information regarding the next guidance point.

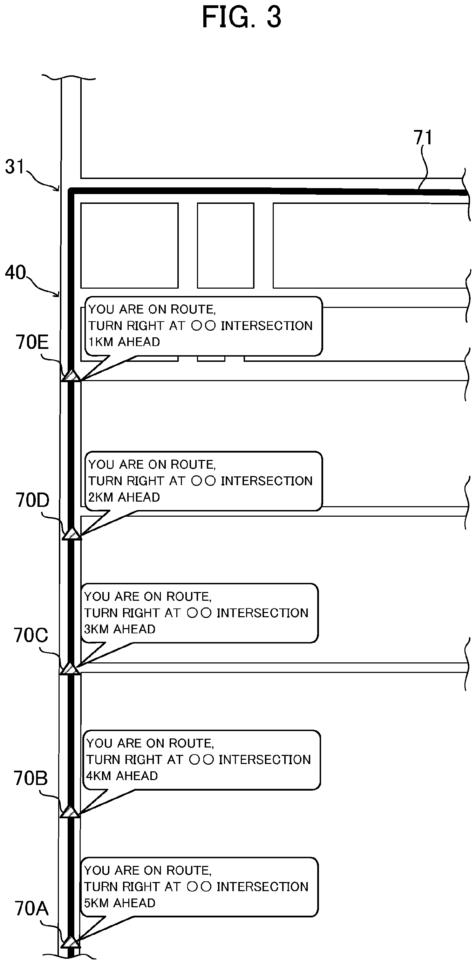

FIG. 3 is a diagram showing the timing and notification contents of the on-route notification based on the first example on the map. FIG. 3 indicates, on a map including a road network, vehicle position marks 70A to 70E indicating the position of the vehicle Ve at the respective timings of the on-route notification to be executed until the arrival at the guidance point 31 and a route line 71 indicating the guidance route. It is assumed that the vehicle Ve is running along the guidance route.

In the first example, while the vehicle Ve is traveling on the road 40 from the guidance point prior to the guidance point 31 to the guidance point 31, the voice guidance device 1 executes an on-route notification including information regarding the distance to the guidance point 31 every time it travels a predetermined distance. Here, since the distance from the guidance point immediately before the guidance point 31 to the guidance point 31 is 5 km or more, the voice guidance device 1 performs the on-route notification every time the vehicle Ve progresses by 1km that is the first distance. Specifically, the voice guidance device 1 outputs a voice stating that "You are on the route, and turn right at ∘∘ intersection 5km ahead" at the point indicated by the vehicle position marking 70A. Similarly, the voice guidance device 1 outputs a voice indicating the on-route travelling of the vehicle and the distance to the next guiding point at each point indicated by the vehicle position mark 70B to the vehicle position mark 70E each of which exists at 1 km intervals from the vehicle position mark 70A.

According to the first example, in a case where the vehicle Ve is traveling on the route where the vehicle Ve goes along the road, the voice guidance device 1 can suitably notify the driver of the fact that the vehicle Ve is travelling on the guidance route and the distance to the next guiding point.

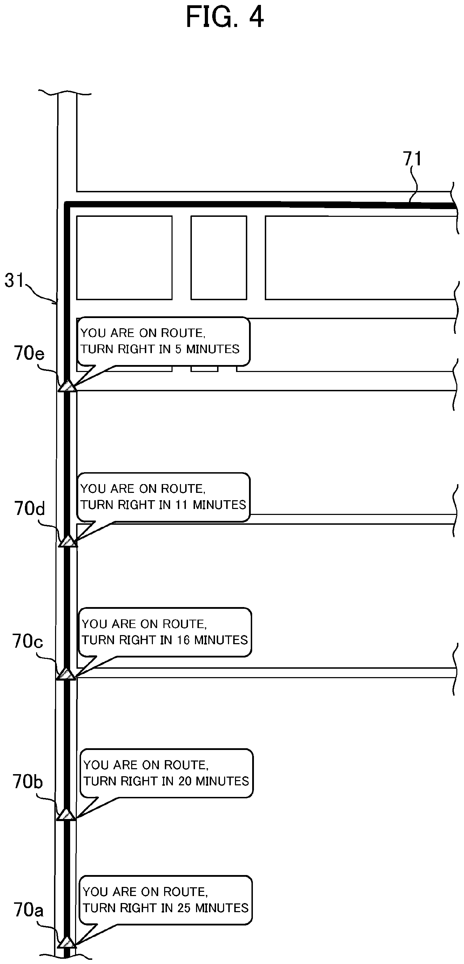

FIG. 4 is a diagram showing on the map the timing and notification contents of the on-route notification based on the second example. FIG. 4 shows, on a map including a road network, vehicle position marks 70a to 70e each indicating the position of the vehicle Ve at each timing of the on-route notification executed until the arrival at the guidance point 31, and a route line 71 indicating the guidance route. It is assumed that the vehicle Ve is running along the guidance route.

In the second example, when the vehicle Ve is running on the road 40 from the guidance point immediately before the guidance point 31 to the guidance point 31, the voice guidance device 1 performs the on-route notification including information on the time taken to get to the guidance point 31 at every predetermined time. Here, since the estimated time taken to get from the guidance point immediately before the guidance point 31 to the guidance point 31 is 25 minutes or more, the voice guidance device 1 performs on-route notification on the road 40 every time 5 minutes that is the first amount of time elapses. Specifically, at the point indicated by the vehicle position mark 70a, the voice guidance device 1 outputs a voice stating that "You are on the route and turn right in 25 minutes". Then, the voice guidance device 1 performs a voice output relating to the on-route travelling of the vehicle and the estimated necessary time to the next guiding point at each point indicated by the vehicle position marks 70b to 70e each indicating the presence position of the vehicle Ve every 5 minutes elapsed from the vehicle position mark 70a.

According to the second example, the voice guidance device 1 can suitably notify the driver of the fact that the vehicle Ve is traveling on the guidance route and the necessary time to the next guidance point when the vehicle Ve is traveling on a route where the vehicle Ve goes along the road.

### (4) Processing Flow

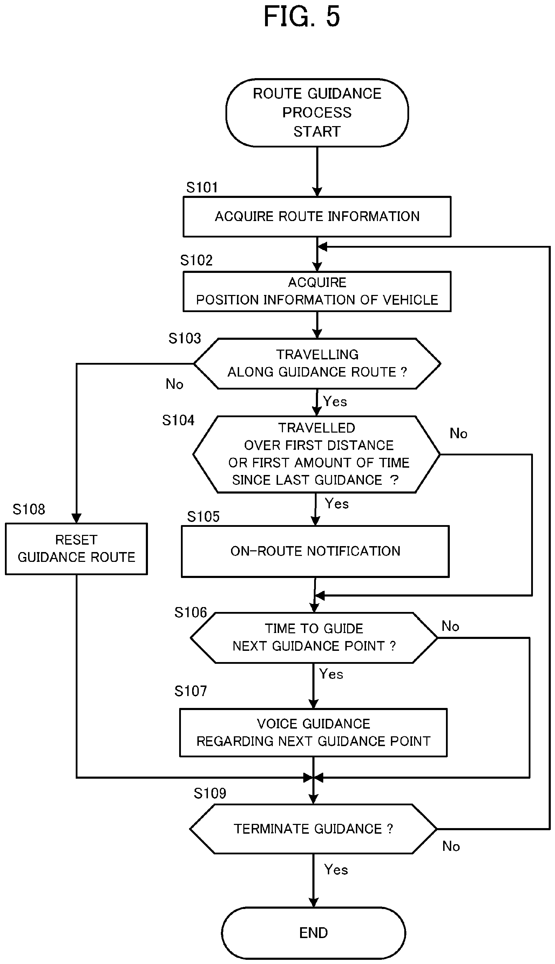

FIG. 5 is an example of a flowchart showing the procedure of the route guidance process executed by the voice guidance device 1 in the first embodiment. The voice guidance device 1 executes the processing of the flowchart shown in FIG. 5 when the destination is set.

First, the voice guidance device 1 acquires route information for the set destination (Step S101). In this case, for example, the voice guidance device 1 performs the route search process based on the map DB 4, the position information of the vehicle Ve, and the information of the set destination, thereby to generate route information indicating the guidance route. In another example, the voice guidance device 1 may acquire the route information indicating the guidance route from a server device which performs the route search process by transmitting the position information and the destination information and the like to the server device. Next, the voice guidance device 1acquires the position information of the vehicle Ve based on the output of the sensor group 15 (Step S102).

Next, on the basis of the route information acquired at Step S101 and the position information of the vehicle Ve acquired at Step S102, the voice guidance device 1 determines whether or not the vehicle Ve is travelling along the guidance route (Step S103). For example, the voice guidance device 1 determines that the vehicle Ve is travelling along the guidance route if the present position of the vehicle Ve and the guidance route are successfully matched based on the map matching approach. Then, when the voice guidance device 1 determines that the vehicle Ve is not travelling along the guidance route (Step S103; No), the voice guidance device 1 resets the guidance route (Step S108). In this case, as with Step S101, the voice guidance device 1 determines the guidance route based on the present position information of the vehicle Ve.

Then, when determining that the vehicle Ve is travelling along the guidance route (Step S103; Yes), the voice guidance device 1 further determines whether or not the first amount of time has elapsed since the last (preceding) voice guide relating to the guidance route or the travelling distance since the time of the last voice guide relating to the guidance route has reached the first distance (Step S104). In this case, at Step S104, the voice guidance device 1 may determine only whether or not the travelling distance since the time of the last voice guide relating to the guidance route has reached the first distance or may determine only whether or not the first amount of time has elapsed since the last voice guide relating to the guidance route. In another example, at Step S104, the voice guidance device 1 may determine whether or not either one of the following two cases occurs, the case that the travelling distance since the time of the last voice guide relating to the guidance route has reached the first distance and the case that the first amount of time has elapsed since the last voice guide relating to the guidance route.

Then, when the voice guidance device 1 determines that the first amount of time has elapsed since the last voice guide relating to the guidance route or that the travelling distance since the time of the last voice guide relating to the guidance route has reached the first distance (Step S104; Yes), it performs on-route notification (Step S105). In this case, the voice guidance device 1 may output by voice only information indicative of the traveling along the guidance route or may output, by voice, information on the next guidance point in addition to the information indicative of the traveling along the guidance route.

When the first amount of time has not elapsed since the last voice guide relating to the guidance route or the travelling distance since the time of the last voice guide relating to the guidance route has not reached the first distance (Step S104; No) or when the on-route notification at Step S105 has finished, the voice guidance device 1 determines whether or not to guide the next guidance point (Step S106). In this case, for example, the voice guidance device 1 determines whether or not the distance to the next guidance point has reached a predetermined distance (e.g., 300m, 500m, 700m, 1km, etc.). The predetermined distance described above, for example, is stored in advance in the storage unit 12. In other words, the voice guidance device 1 determines at Step S106 whether or not now is an output time of the voice guidance performed in the common route guidance.

Then, when the voice guidance device 1 determines that now is the time to guide the next guidance point (Step S106; Yes), it performs voice guidance for the next guidance point (Step S107). In this case, the voice guidance device 1 outputs a voice guidance performed in a general route guidance. On the other hand, when the voice guidance device 1 determines that now is not the time to guide the next guidance point (Step S106; No), the process proceeds to Step S109.

Next, the voice guidance device 1 determines whether or not to terminate the voice guidance for the guidance route (Step S109). For example, when determining that the vehicle Ve has arrived at the set destination, or that it detects a user input instructing the end of the route voice guidance, the voice guidance device 1should terminate the guidance. Then, when determining that the voice guidance should be terminated (Step S109; Yes), the process of the flowchart ends. On the other hand, when determining that the voice guidance should not be terminated (Step S109; No), the voice guidance device 1 returns the process to Step S102.

It is noted that, regardless of the processing of the flowchart in FIG. 5, the voice guidance device 1 may perform an on-route notification only when traveling on the route where the vehicle goes along the road over the second distance. In this case, for example, the voice guidance device 1 performs the on-route notification based on Step S105 when determining at Step 104 that the first amount of time has elapsed or the travelling distance has reached the first distance since the last voice guide relating to the guidance route and that the vehicle Ve is traveling on the route where the vehicle goes along the road over the second distance.

### <Second Embodiment>

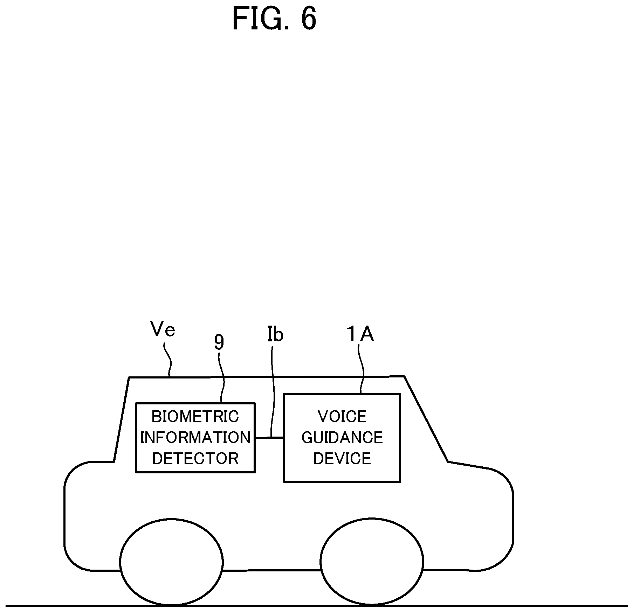

FIG. 6 shows a configuration example of a voice guidance system according to the second embodiment. The voice guidance system according to the second embodiment includes a vehicle Ve, a voice guidance device 1A, and a biometric information detector 9. The second embodiment differs from the first embodiment in that, instead of performing on-route notification based on the first distance or the first amount of time, the voice guidance device 1A detects the timing when the driver feels anxious based on the biometric information detected by the biometric information detector 9 thereby to perform the on-route notification at the timing. Hereafter, the same components as in the first embodiment are denoted by the same reference numerals as the components in the first embodiment, and the description thereof will be omitted.

The biometric information detector 9 generates the driver's biometric information "Ib" such as pulse information, and supplies the detected biometric information Ib to the voice guidance device 1A. The biometric information Ib generated by the biometric information detection device 9 is time series data represented by arbitrary biometric index values which vary according to the degree of anxiety of the driver, and the above-described biometric index values may be not only values of the pulse but also values of an electroencephalogram, the amount of perspiration, or the like. The biometric information detector 9 may be a wearable device such as a clock to be worn by the driver, or may be a dedicated sensor provided in the driver's seat to detect the driver's biometric index. The biometric information detector 9 transmits the detected biometric information Ib to the voice guidance device 1A through wired or wireless data communication.

The voice guidance device 1A has the same configuration as the audio guidance device 1 described in the first embodiment described above (see FIG. 2). Then, the voice guidance device 1A receives the biometric information Ib from the biometric information detector 9 via the communication unit 11. Then, the voice guidance device 1A detects the timing (also referred to as "anxious timing") when the driver feels anxious on the basis of the time-series biometric index values indicated by the received biometric information Ib.

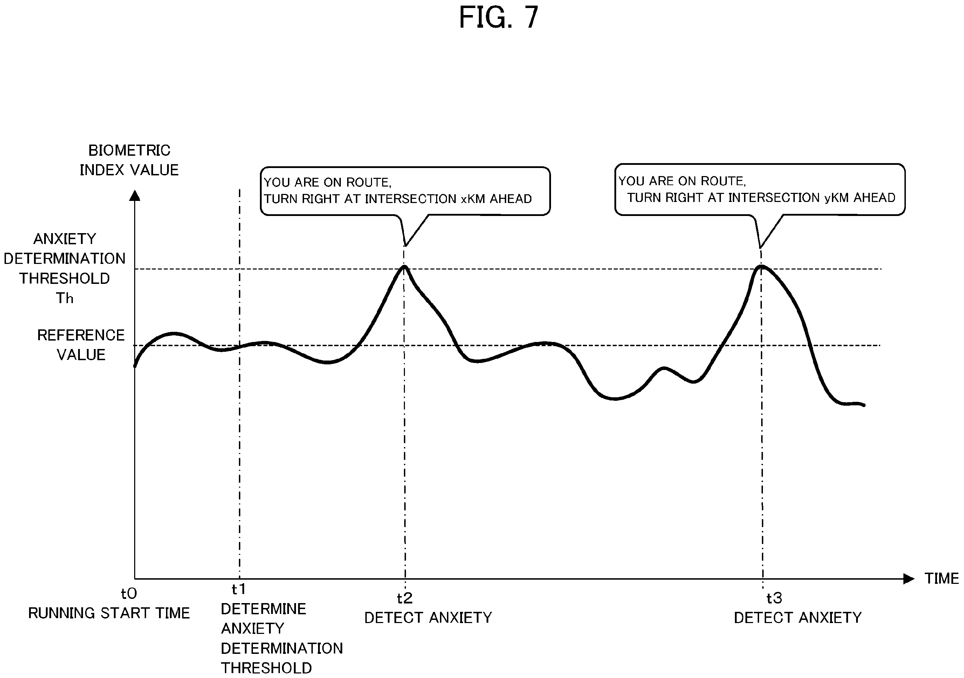

FIG. 7 is a graph showing an example of time variation of the biometric index values indicated by the biometric information Ib since the running start time "t0" of the vehicle Ve. Hereinafter, the biometric index value shall be higher as the degree of driver's anxiety is higher.

In the example of FIG. 7, first, the voice guidance device 1A determines a threshold value (also referred to as "anxiety determination threshold Th") for detecting the anxious timing based on the biometric index values indicated by the biometric information Ib generated during the period from the running start time t0 to the time "t1" that is a predetermined time after the time t0. In other words, the anxiety determination threshold Th is a threshold value for determining whether or not the biometric index value indicated by the biometric information Ib obtained from the biometric information detector 9 is an abnormal value. Here, the voice guidance device 1A calculates the average value (or another representative value) of the biometric index values from time t0 to time t1 as a reference value indicating the biometric index value at the time of normal operation by the driver. Then, the voice guidance device 1A determines the anxiety determination threshold Th to be a predetermined value higher than the reference value. The above-described predetermined value is stored in advance in the storage unit 12. The time t1 may be a time elapsed by a predetermined time length from time t0 or may be a time when the voice guidance device 1A detects that the biometric index value has become a steady state.

In this way, the voice guidance device 1A sets the anxiety determination threshold Th based on the biometric index value detected from the target driver in the past. Thereby, it is possible to determine the anxiety determination threshold Th appropriately regardless of the individual difference of the biometric index value. In place of the above example, the voice guidance device 1A may determine the above-mentioned reference value and the anxiety determination threshold Th based on the biometric index values detected from the running start time of the vehicle Ve to the time immediately before the use of the anxiety determination threshold Th. Similarly, the voice guidance device 1A may store the biometric index values detected during use of the previous vehicle Ve in the storage unit 12 and determine the reference value and the anxiety determination threshold Th described above by referring to the biometric index values from the storage unit 12 at the start of the current use of the vehicle Ve.

Then, the voice guidance device 1A determines at around the time "t2" that the anxious timing has occurred since the biometric index value detected by the biometric information detector 9 has become equal to or greater than the anxiety determination threshold Th. In this case, after confirming that the vehicle Ve is traveling along the guidance route based on the position information of the vehicle Ve, the route information, and the map DB 4, the voice guidance device 1A performs the on-route notification. Similarly, the voice guidance device 1A performs the on-route notification at around the time "t3" since the biometric index value detected by the biometric information detector 9 becomes equal to or greater than the anxiety determination threshold Th and the vehicle Ve is traveling along the guidance route.

Instead of using the biometric index value indicated by the biometric information Ib as the degree of anxiety of the driver as it is, the speech guidance device 1A may calculate a value (anxiety degree) indicating a degree of anxiety of the driver by performing a predetermined operation on the biometric information Ib to thereby detect an anxious timing based on the anxiety degree. Further, the detection of the anxious timing is not limited to the example described with reference to FIG. 7, the voice guidance device 1A may detect the anxious timing based on the bioinformation Ib using any technique commonly used in the abnormal detection (anomaly detection: Anomaly Detection).

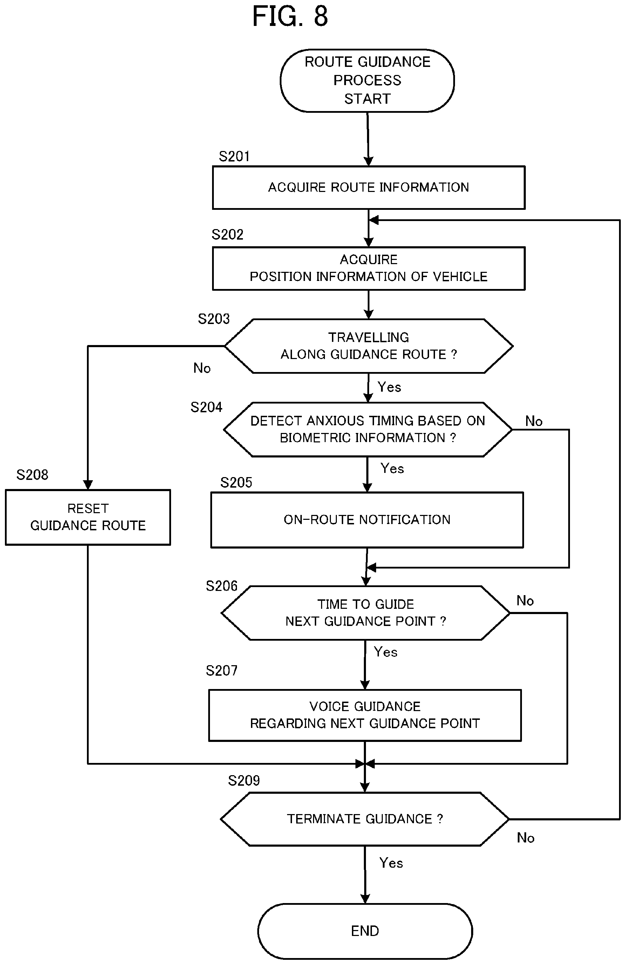

FIG. 8 is an example of a flow chart illustrating a procedure of a route guidance process performed by the voice guidance device 1A in the second embodiment. The voice guidance device 1A executes the processing of the flow chart shown in FIG. 8 when the destination is set.

First, the voice guidance device 1A acquires route information for the set destination (Step S201). Next, the voice guidance device 1A acquires the position information of the vehicle Ve based on the output of the sensor group 15 (Step S202). Then, the voice guidance device 1A determines whether or not the vehicle Ve is travelling along the guidance route, based on the route information acquired at Step S201 and the positional information of the vehicle Ve acquired at Step S202 (Step S203). Then, when determining that the vehicle Ve is not travelling along the guidance route (Step S203; No), the voice guidance device 1A resets the guidance route (Step S208).

Then, when determining that the vehicle Ve is travelling along the guidance route (Step S203; Yes), the voice guidance device 1A determines whether or not it has detected the anxious timing based on the biometric information Ib supplied from the biometric information detector 9 (Step S204). In this case, the voice guidance device 1A determines whether or not the present driver's biometric index value indicated by the biometric information Ib supplied from the biometric information detector 9 is equal to or greater than the anxiety determination threshold Th stored in the storage unit 12. In such a case that the voice guidance device 1A determines the anxiety determination threshold Th based on the biometric index values detected by the biometric information detector 9 during a predetermined period immediately after the start of running, the voice guidance device 1A may proceed with the process at Step S206 without making the determination at Step S204 during the predetermined period.

Then, when the voice guidance device 1A detects the anxious timing based on the biometric information Ib (Step S204; Yes), it performs on-route notification (Step S205). In this case, the voice guidance device 1A may output by voice not only information that the vehicle is travelling along the guidance route but also the information regarding the next guidance point.

Then, the voice guidance device 1A determines whether or not to guide the next guidance point (Step S206). Then, when the voice guidance device 1A determines that now is the time to guide the next guidance point (Step S206; Yes), it performs voice guidance for the next guidance point (Step S207). On the other hand, when determining that now is not the time to guide the next guidance point (Step S206; No), the voice guidance device 1A advances the process to Step S209.

Next, the voice guidance device 1A determines whether or not to terminate the voice guidance for the guidance route (Step S209). Then, when the voice guidance device 1 determines that the voice guidance should be terminated (Step S209; Yes), the process of the flowchart ends. On the other hand, when determining that the voice guidance should not be terminated (Step S209; No), the voice guidance device 1 returns the process to Step S202.

As described above, the voice guidance device 1A according to the second embodiment performs the on-route notification when detecting the anxious timing based on the biometric information lb. Thereby, it is possible to suitably suppress or eliminate the driver's anxiety due to uncertainty of traveling along the guidance route.

### <Third Embodiment>

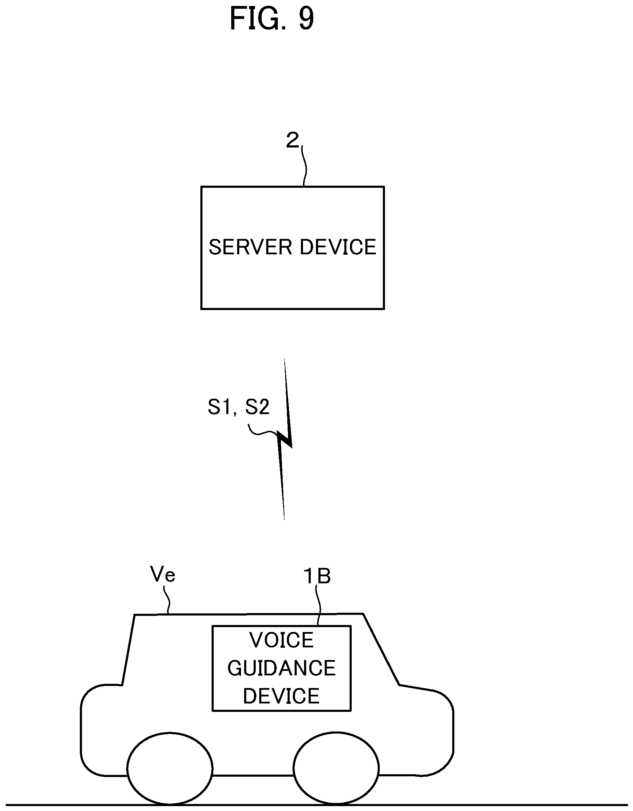

FIG. 9 is a configuration example of a voice guidance system according to the third embodiment. The voice guidance system according to the third embodiment mainly includes a vehicle Ve, a voice guidance device 1B, and a server device 2. Hereinafter, the same components as in the first embodiment are denoted by the same reference numerals as the components in the first embodiment and the description thereof will be omitted.

The voice guidance device 1B has the same configuration as the audio guidance device 1 described in the first embodiment described above (see FIG. 2). In this embodiment, since the server device 2 performs the route search process and the route guide process based on the map DB 4, the voice guidance device 1B may not have a map DB 4. Then, when detecting the user input specifying the destination or the like by the input unit 13, the voice guidance device 1B transmits the upload signal "S1" including the position information of the vehicle Ve outputted by the sensor group 15 and the information relating to the specified destination to the server device 2. Further, at the time when the vehicle Ve is travelling, the voice guidance device 1B supplies the upload signal S1 including the position information of the vehicle Ve to the server device 2. Further, when the voice guidance device 1B receives the control signal "S2" relating to the audio output from the server device 2 at the time when the vehicle Ve is travelling, it performs audio output by the audio output unit 17 based on the control signal S2. In this case, the voice guidance device 1B performs the output relating to the route voice guidance and the output of the on-route notification based on the control signal S2.

The server device 2 generates a route information indicating a guidance route to be traveled by the vehicle Ve, based on the upload signal S1 including a destination or the like sent by the voice guidance device 1B. Thereafter, on the basis of the position information of the vehicle Ve and the route information indicated by upload signal S1 sent by the voice guidance device 1B, the server device 2 generates a control signal S2 relating to the output of the voice guide or on-route notification relating to the guidance route. Then, the server device 2 transmits the generated control signal S2 to the voice guidance device 1B.

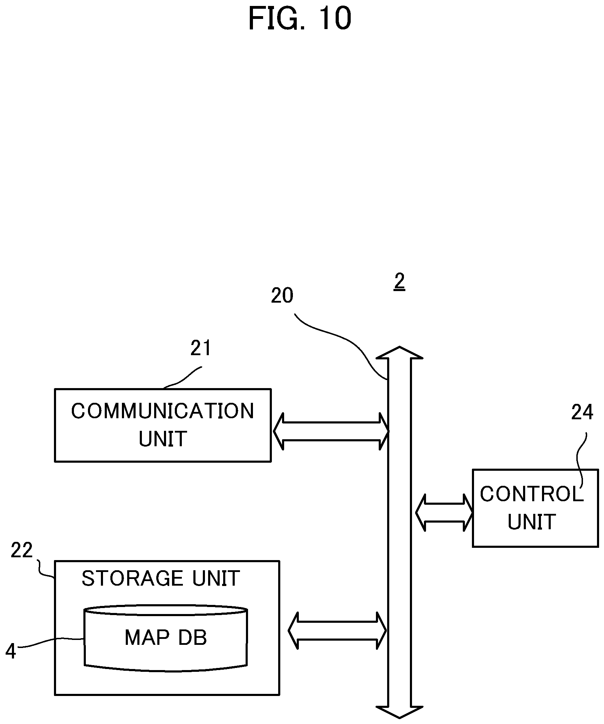

FIG. 10 shows an example of a schematic configuration of the server device 2. The server device 2 mainly includes a communication unit 21, a storage unit 22, and a control unit 24. Each element in the server device 2 is interconnected via a bus line 20.

The communication unit 21 performs data communication with an external device such as a voice guidance device 1B, based on the control of the control unit 24. The storage unit 22 is configured by various memories such as a RAM, a ROM, and a nonvolatile memory (including a hard disk drive, a flash memory, and the like). The storage unit 22 stores a program for the server device 2 to execute a predetermined process. Further, the storage unit 22 includes a map DB 4. The control unit 24 includes a CPU, a GPU, and the like, and controls the entire server device 2. Further, the control unit 24 executes at least a portion of the process executed by the voice guidance device 1 described in the above example, by executing a program stored in the storage unit 22. For example, on the basis of the upload signal S1 received via the communication unit 21 from the voice guidance device 1B, the control unit 24 generates the route information indicating the guidance route and generates the control signal S2 relating to the output of the voice guidance relating to the guidance point or the on-route notification. Then, the control unit 24 transmits the generated control signal S2 to the audio guidance device 1B by the communication unit 21.

Here, the server device 2 executes processing of the flowchart shown in FIG. 5 based on the upload signal S1 and the map DB 4. In this case, at Step S101, the server device 2 generates the route information based on the upload signal S1 including the information relating to the destination and the output of the sensor group 15. Further, at Step S102, the server device 2 generates or acquires the position information of the vehicle Ve based on the upload signal S1 relating to the output of the sensor group 15 transmitted from the voice guidance device 1B. Then, at Step S105, the server device 2 generates a control signal S2 instructing the audio output of the on-route notification, and transmits the control signal S2 to the audio guidance device 1B. Further, at Step S107, the server device 2 generates a control signal S2 for instructing the audio output of the voice guidance relating to the next guiding point, and transmits the control signal S2 to the voice guidance device 1B.

In this way, even when the server device 2 substantially controls the voice guidance device 1B relating to the route guidance, the voice guidance system can suitably notify the user that the vehicle Ve has been able to pass through the guidance point according to the route voice guidance as in the first embodiment. In the third embodiment, the server device 2 is an example of the "information processing device".

It is noted that the third embodiment can be suitably combined with the second embodiment. In this case, the server device 2 receives the biometric information Ib from the biometric information detector 9 provided in the vehicle Ve and detects the anxious timing by the same method as the voice guidance device 1A in the second embodiment. Then, the server device 2 generates a control signal S2 instructing the audio output of the on-route notification when detecting the anxious timing, and transmits the control signal S2 to the audio guidance device 1B.

### <Fourth Embodiment>

In the fourth embodiment, the voice guiding device 1 according to the first embodiment, the voice guiding device 1A according to the second embodiment, or the voice guiding device 1B according to the third embodiment is a portable terminal for guiding a pedestrian, and performs voice guidance of the walking path for reaching the set destination. Then, the server device 2 which controls the voice guidance device 1, the voice guidance device 1A, or the voice guidance device 1B executes the processing of the flowchart in FIG. 5 or FIG. 8, and performs the on-route notification at the timing at which the driver feels anxious. The timing described above is a timing based on the first distance or the first amount of time described in the first embodiment, or the anxious timing detected based on the biometric information Ib described in the second embodiment. Thus, the pedestrian can suitably confirm, only by ear without viewing the screen display of the portable terminal, that the pedestrian is traveling along the guidance route. In this case, since an issue such as a so-called smartphone zombie does not occur, it is possible to perform an on-route notification while ensuring safety. The pedestrian is an example of the "moving body".

As described above, the voice guidance device 1, the voice guidance device 1A or the server device 2 includes a route information acquisition unit, a position information acquisition unit, a voice guiding unit, and a notification unit. The route information acquisition unit is configured to acquire route information indicative of a route on which a moving body travels. The position information acquisition unit is configured to acquire position information of the moving body. The voice guiding unit is configured to perform a voice guidance relating to the route. The notification unit is configured to perform a notification by voice that the moving body is traveling along the route, if the moving body is travelling along the route and the voice guiding unit has not performed the voice guidance during travel of the moving body for a predetermined distance or for a predetermined amount of time. This allows the user to more suitably recognize that the moving body is traveling along the route by ear. Therefore, it is possible to suitably suppress or eliminate the anxiety that the user feels due to absence of the voice guidance for a while.

In the embodiments described above, the program is stored by any type of a non-transitory computer-readable medium (non-transitory computer readable medium) and can be supplied to a control unit or the like that is a computer. The non-transitory computer-readable medium include any type of a tangible storage medium. Examples of the non-transitory computer readable medium include a magnetic storage medium (e.g., a flexible disk, a magnetic tape, a hard disk drive), a magnetic-optical storage medium (e.g., a magnetic optical disk), CD-ROM (Read Only Memory), CD-R, CD-R/W, a solid-state memory (e.g., a mask ROM, a PROM (Programmable ROM), an EPROM (Erasable PROM), a flash ROM, a RAM (Random Access Memory)).

While the present invention has been described with reference to the embodiments, the present invention is not limited to the above embodiments. Various changes that can be understood by those skilled in the art within the scope of the present invention can be made in the configuration and details of the present invention. In other words, it is needless to say that the present invention includes various modifications that could be made by a person skilled in the art according to the entire disclosure including the scope of the claims, and the technical philosophy. In addition, all patent and non-patent literatures mentioned in this specification are incorporated by reference in its entirety.

### DESCRIPTION OF REFERENCE NUMERALS

- 1: Voice guidance device
- 2: Server device
- 4: Map DB
- 9: Biometric detector
- 11,21: Communication unit
- 12,22: Storage unit
- 13: Input unit
- 14, 24: Control unit
- 15: Sensor group
- 16: Display unit
- 17: Audio output unit

## Claims

1. An information processing device comprising:
a route information acquisition unit configured to acquire route information indicative of a route on which a moving body travels;
a position information acquisition unit configured to acquire position information of the moving body;
a voice guiding unit configured to perform a voice guidance relating to the route; and
a notification unit configured to perform a notification by voice that the moving body is traveling along the route, if the moving body is travelling along the route and the voice guiding unit has not performed the voice guidance during travel of the moving body for a predetermined distance or for a predetermined amount of time.

2. The information processing device according to claim 1,
wherein the notification unit is configured, when performing the notification by voice that the moving body is traveling along route, to perform the notification of information relating to distance or necessary time to a next guidance point of the moving body.

3. The information processing device according to claim 1 or 2, further comprising:
a history information generation unit configured, when there is a user input instructing a notification of whether or not the moving body is traveling along the route, to generate history information of the notification based on the user input; and
a learning unit configured to learn the predetermined distance or the predetermined amount of time based on the history information.

4. The information processing device according to claim 3,
wherein the history information includes information regarding a traveling distance of the moving body or an elapsed time from a time of the voice guidance immediately before the user input to a time of receiving the user input, and
wherein the learning unit is configured to learn the predetermined distance or the predetermined amount of time to be a representative value of the traveling distance or a representative value of the elapsed time.

5. The information processing device according to any one of claims 1 to 4,
wherein the notification unit is configured, in a case where the moving body is travelling on a route where the moving body goes along a road over a second distance, to perform the notification by voice that the moving body is traveling along the route, if the moving body is travelling along the route and the voice guiding unit has not performed the voice guidance during travel of the moving body for the predetermined distance or for the predetermined amount of time.

6. An information processing device comprising:
a route information acquisition unit configured to acquire route information indicative of a route on which a moving body that is a pedestrian or a vehicle travels;
a position information acquisition unit configured to acquire position information of the moving body;
a biometric information acquisition unit configured to acquire biometric information regarding the pedestrian or a driver of the vehicle;
a voice guiding unit configured to perform a voice guidance relating to the route; and
a notification unit configured to perform a notification by voice that the moving body is traveling along the route, if an index value based on the biometric information indicates an abnormal value and the moving body is travelling along the route.

7. The information processing device according to claim 6,
wherein the notification unit is configured to determine a threshold value for determining whether or not the index value is the abnormal value, based on the biometric information acquired in advance by the biometric information acquisition unit.

8. A control method executed by an information processing device, the control method comprising:
acquiring route information indicative of a route on which a moving body travels;
acquiring position information of the moving body;
performing a voice guidance relating to the route; and
performing a notification by voice that the moving body is traveling along the route, if the moving body is travelling along the route and the voice guidance has not been performed during travel of the moving body for a predetermined distance or for a predetermined amount of time.

9. A program executed by a computer, the program causing the computer to function as:
a route information acquisition unit configured to acquire route information indicative of a route on which a moving body travels;
a position information acquisition unit configured to acquire position information of the moving body;
a voice guiding unit configured to perform a voice guidance relating to the route; and
a notification unit configured to perform a notification by voice that the moving body is traveling along the route, if the moving body is travelling along the route and the voice guiding unit has not performed the voice guidance during travel of the moving body for a predetermined distance or for a predetermined amount of time.

10. A storage medium storing the program according to claim 9.
